# EUROPÄISCHE PATENTANMELDUNG

(11) **EP 2 805 756 A1**
(43) Veröffentlichungstag der Anmeldung: **26.11.2014**
(21) Anmeldenummer: 14001736.9
(22) Anmeldetag: 15.05.2014
(51) Int. Cl.: B01D 53/14, C01B 3/52, C01B 17/04, C10K 1/08

(54) **Verfahren und Vorrichtung zur Sauergaswäsche eiens Synthesegases und zur Behandlung eines schwefelhaltigen Abgases aus einer Schwefelgewinnung**

(30) Priorität: 23.05.2013 DE 102013008852
(71) Anmelder: Linde Aktiengesellschaft, 80331 München (DE)
(72) Erfinder: Kerestecioglu, Ulvi, 82269 Geltendorf (DE); Brandl, Alexander, 81549 München (DE)
(74) Vertreter: Fischer, Werner

(57) **Zusammenfassung**

Die Erfindung betrifft ein Verfahren sowie eine Vorrichtung zur Gewinnung von Schwefel (9), bei dem in einer einen Wasch- (W) und einen Regenerierteil (R) umfassenden Sauergaswäsche (S) Schwefelkomponenten und Kohlendioxid selektiv mit Hilfe eines im Kreislauf geführten Waschmittels (3) aus einem Syntheserohgas (2) abgetrennt werden und eine bei der Regenerierung von beladenem Waschmittel erzeugte schwefelhaltige Gasfraktion (8) einer Schwefelgewinnung (G) zugeführt wird, bei der ein Kohlendioxid sowie Schwefelkomponenten enthaltendes Abgas (10) entsteht, das hydriert (H) und nachfolgend einer Gaswäsche (Z) unterzogen wird. Die Erfindung zeichnet sich dadurch aus, dass das hydrierte Abgas (12) unabhängig von dem zu behandelnden Syntheserohgas (2) gewaschen wird, wobei aus dem Waschmittelkreislauf der Sauergaswäsche (S) entnommenes Waschmittel (13) dazu eingesetzt wird, um Schwefelkomponenten auszuwaschen.

## Beschreibung

Die Erfindung betrifft ein Verfahren zur Gewinnung von Schwefel, bei dem in einer einen Wasch- und einen Regenerierteil umfassenden Sauergaswäsche Schwefelkomponenten und Kohlendioxid selektiv mit Hilfe eines im Kreislauf geführten Waschmittels aus einem Syntheserohgas abgetrennt werden und eine bei der Regenerierung von beladenem Waschmittel erzeugte schwefelhaltige Gasfraktion einer Schwefelgewinnung zugeführt wird, bei der ein Kohlendioxid sowie Schwefelkomponenten enthaltendes Abgas entsteht, das hydriert und nachfolgend einer Gaswäsche unterzogen wird.

Weiterhin betrifft die Erfindung eine Vorrichtung zur Durchführung des Verfahrens.

Unter der Hydrierung des Abgases ist hierbei zu verstehen, dass das im Abgas enthaltene Schwefeldioxid hydriert wird, wobei Schwefelwasserstoff entsteht.

Ein Verfahren der beschriebenen Art ist beispielsweise aus der Patentschrift EP0054772B1 bekannt. Dabei wird das hydrierte Abgas in die Sauergaswäsche zurückgeführt und entweder gemeinsam mit dem Syntheserohgas einer Gaswäsche unterzogen oder in die Schwefelwasserstoff-Anreicherungsstufe des Regenerierteils der Sauergaswäsche eingeleitet. Mit diesem Verfahren wird eine praktisch vollständige Gewinnung des im Syntheserohgas enthaltenen Schwefels in elementarer Form ermöglicht. Da jedoch das schwefelhaltige Abgas bei der Schwefelgewinnung mit einem Druck anfällt, der i. Allg. zu gering ist, um die bis zur Einleitungsstelle in die Sauergaswäsche auftretenden Druckverluste decken und den normalerweise an der Einleitungsstelle herrschenden höheren Betriebsdruck kompensieren zu können, fallen für die erforderliche Verdichtung des Abgases erhebliche Betriebskosten an, die sich negativ auf die Wirtschaftlichkeit des Verfahrens auswirken. Darüber hinaus führt die Notwendigkeit, zumindest einige der als Druckbehälter ausgeführten Anlagenteile der Synthesegaswäsche auf einen größeren Durchsatz auszulegen, zu erhöhten Investitionskosten.

Aufgabe der Erfindung ist es daher, ein Verfahren der eingangs beschriebenen Art sowie eine Vorrichtung zu dessen Durchführung anzugeben, die es erlauben, die Schwefelgewinnung wirtschaftlicher durchzuführen, als dies nach dem Stand der Technik möglich ist.

Diese Aufgabe wird verfahrensseitig erfindungsgemäß dadurch gelöst, dass das hydrierte Abgas unabhängig von dem zu behandelnden Syntheserohgas gewaschen wird, wobei aus dem Waschmittelkreislauf der Sauergaswäsche entnommenes Waschmittel dazu eingesetzt wird, um Schwefelkomponenten auszuwaschen.

Das erfindungsgemäße Verfahren erlaubt es, die Wäsche des hydrierten Abgases (Abgaswäsche) bei einem wesentlich geringeren als dem Arbeitsdruck der Sauergaswäsche durchzuführen, der i. Allg. an einer nach dem Stand der Technik geeigneten Einleitungsstelle größer ist als 2bar(a). Insbesondere ist es möglich, zwischen dem Entstehungsort des Abgases und der Abgaswäsche ein Druckgefälle einzustellen, das ausreichend ist, um das Abgas ohne Verdichtung aus der Schwefelgewinnung in die Abgaswäsche zu überführen. Zwar müssen für die Durchführung der Abgaswäsche gegenüber dem Stand der Technik zusätzliche Anlagenteile vorgesehen werden, die jedoch wegen ihres niedrigen Betriebsdrucks mit vergleichsweise geringen Kosten zu realisieren sind. Vorzugsweise wird die Abgaswäsche bei einem Druck zwischen 0,2 und 5 bar(a) durchgeführt.

Sinnvollerweise wird das bei der Abgaswäsche mit Schwefelkomponenten beladene Waschmittel in den Regenerierteil der Sauergaswäsche geführt, um dort regeneriert zu werden.

Eine bevorzugte Ausgestaltung des erfindungsgemäßen Verfahrens sieht vor, dass für die Durchführung der Abgaswäsche ein Waschmittel eingesetzt wird, das bei der Wäsche von Syntheserohgas bereits mit Kohlendioxid vorbeladen wurde, das jedoch praktisch frei von Schwefelkomponenten ist. Hierdurch kann eine weitgehend selektive Abtrennung der Schwefelkomponenten aus dem hydrierten Abgas erreicht werden, so dass nahezu das gesamte im Abgas enthaltene Kohlendioxid in der Gasphase verbleibt und nachfolgend beispielsweise durch Freisetzung in die Atmosphäre entsorgt werden kann.

Um das Schwefelkomponenten enthaltende Abgas mit ausreichend hohem Druckgefälle gegenüber der Abgaswäsche zu erzeugen, kann es erforderlich sein, die Schwefelgewinnung mit erhöhtem Druck zu betreiben. Hierzu wird vorgeschlagen, den Betriebsdruck im Regenerierteil der Sauergaswäsche über den eigentlich notwendigen Wert anzuheben, so dass die schwefelreiche Gasfraktion mit erhöhtem Druck erhalten und der Schwefelgewinnung zugeführt werden kann. Normalerweise muss hierzu lediglich der Betriebsdruck der Heißregenerierkolonne erhöht werden, in der die schwefelreiche Gasfraktion anfällt. Gewöhnlich werden die sich aus dieser Betriebsweise ergebenden Kosten durch den Verzicht auf die Verdichtung des Abgases kompensiert, wenn der Betriebsdrucks im Regenerierteil um nicht mehr als 1 bar angehoben zu werden braucht.

Das erfindungsgemäße Verfahren kann in Verbindung allen bekannten physikalischen und chemischen Sauergaswäschen durchgeführt werden. Vorzugsweise handelt es sich jedoch bei der Sauergaswäsche um eine Methanolwäsche, bei der Methanol als Waschmittel eingesetzt wird.

Weiterhin betrifft die Erfindung eine Vorrichtung zur Gewinnung von Schwefel mit einer einen Wasch- und einen Regenerierteil umfassenden Sauergaswäsche, in der Schwefelkomponenten und Kohlendioxid selektiv mit Hilfe eines im Kreislauf geführten Waschmittels aus einem Syntheserohgas abgetrennt werden können, einer Schwefelgewinnung, der eine im Regenerierteil der Sauergaswäsche anfallende schwefelhaltige Gasfraktion zuführbar ist und aus der ein Kohlendioxid sowie Schwefelkomponenten enthaltendes Abgas abziehbar ist, sowie einer Hydriereinrichtung, in der das Abgas hydriert werden kann.

Vorrichtungsseitig wird die gestellte Aufgabe erfindungsgemäß dadurch gelöst, dass sie eine sowohl mit der Hydriereinrichtung als auch dem Waschmittelkreislauf der Sauergaswäsche verbundene Wascheinrichtung umfasst, in der das hydrierte Abgas einer Wäsche mit aus dem Waschmittelkreislauf der Sauergaswäsche zugeführtem Waschmittel unterzogen werden kann.

Zweckmäßigerweise ist die Wascheinrichtung auch mit dem Regenerierteil der Sauergaswäsche verbunden, so dass bei der Abgaswäsche mit Schwefelkomponenten beladenes Waschmittel zur Regenerierung in den Regenerierteil eingeleitet werden kann.

Bevorzugte Ausgestaltungen der erfindungsgemäßen Vorrichtung sehen vor, dass die Wascheinrichtung als Kolonne mit Packung und/oder Böden oder als Sprühdüsenwäscher oder Wirbelstromnassabscheider oder Venturiwäscher oder Fallfilmabsorber ausgeführt und auf einen Betriebsdruck ausgelegt ist, der zwischen 0,2 und 5 bar(a) liegt.

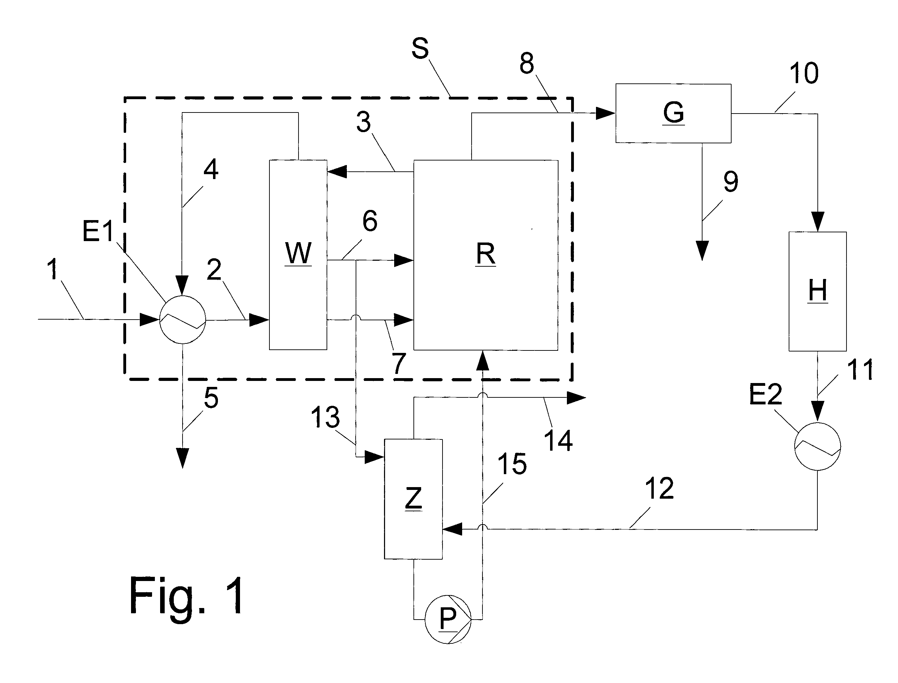

Im Folgenden soll die Erfindung anhand eines in der Figur 1 schematisch dargestellten Ausführungsbeispiels näher erläutert werden.

Die Figur 1 zeigt das Verfahrensschema für eine bevorzugte Variante des erfindungsgemäßen Verfahrens.

In dem dargestellten Ausführungsbeispiel gelangt ein vorwiegend aus Wasserstoff, Kohlenmonoxid, Kohlendioxid und Schwefelwasserstoff bestehendes Syntheserohgas über Leitung 1 über den Wärmetauscher E1 in die Sauergaswäsche S, bei der es sich beispielsweise um eine Methanolwäsche handelt. Die Sauergaswäsche S umfasst einen Waschteil W und einen Regenerierteil R, zwischen denen ein Waschmittel in einem Kreislauf zirkuliert. Im Waschteil W werden aus dem im Wärmetauscher E1 abgekühlten Syntheserohgas 2 Kohlendioxid und Schwefelwasserstoff mithilfe eines Waschmittels 3 bei einem Druck von bis zu 80 bar weitgehend selektiv abgetrennt, wobei ein nahezu vollständig aus Wasserstoff und Kohlenmonoxid bestehendes Synthesegas 4, ein lediglich mit Kohlendioxid beladener Waschmittelstrom 6 sowie ein mit Kohlendioxid und Schwefelwasserstoff beladener Waschmittelstrom 7 entstehen. Während das Synthesegas 4 nach Anwärmung gegen das abzukühlende Syntheserohgas 1 über Leitung 5 einer Verwendung außerhalb der Anlagengrenzen zugeführt wird, werden die beiden beladenen Waschmittelströme 6 und 7 in den Regenerierteil R eingeleitet, um dort regeneriert zu werden. Bei der Regenerierung werden die im Waschteil durch das Waschmittel aufgenommenen Stoffe abgetrennt, wobei regeneriertes Waschmittel 3 sowie u.a. eine schwefelwasserstoffreiche Gasphase 8 entstehen. Aus dem Regenerierteil R wird die schwefelwasserstoffreiche Gasphase 8 in die Schwefelgewinnung G weitergeführt, um den enthaltenen Schwefel in elementarer Form 9 zu gewinnen. Das gleichzeitig erzeugte Abgas 10, das überwiegend aus Kohlendioxid und Schwefeldioxid besteht, fällt mit einem Druck an, der ausreicht, um es ohne eine Zwischenverdichtung über die Hydriereinrichtung H in die Wascheinrichtung Z einzuleiten, die bei einem Betriebsdruck zwischen 0,2 und 5 bar(a) betrieben wird. In der Hydriereinrichtung H wird das im Abgas 10 enthaltene Schwefeldioxid zu Schwefelwasserstoff hydriert, wobei ein hydriertes Abgas 11 entsteht, so dass der Wascheinrichtung Z nach der Entfernung von Wasser (nicht dargestellt) und einer Abkühlung im Wärmetauscher E2 ein weitgehend aus Kohlendioxid und Schwefelwasserstoff bestehender Gasstrom 12 zugeführt werden kann. Über Leitung 13 wird aus dem Waschmittelkreislauf der Sauergaswäsche S ein mit Kohlendioxid vorbeladenes Waschmittel herangeführt, mit dem der Schwefelwasserstoff weitgehend selektiv aus dem Gas 12 entfernt werden kann, so dass ein vorwiegend aus Kohlendioxid bestehender Strom 14 sowie ein mit Schwefelwasserstoff und Kohlendioxid beladener Waschmittelstrom 15 entstehen. Während das Kohlendioxid 14 beispielsweise in die Atmosphäre entsorgt wird, gelangt der Waschmittelstrom 15 mithilfe der Pumpe P in den Regenerierteil R der Sauergaswäsche, wo er regeneriert wird.

## Patentansprüche

1. Verfahren zur Gewinnung von Schwefel (9), bei dem in einer einen Wasch- (W) und einen Regenerierteil (R) umfassenden Sauergaswäsche (S) Schwefelkomponenten und Kohlendioxid selektiv mit Hilfe eines im Kreislauf geführten Waschmittels (3) aus einem Syntheserohgas (2) abgetrennt werden und eine bei der Regenerierung von beladenem Waschmittel erzeugte schwefelhaltige Gasfraktion (8) einer Schwefelgewinnung (G) zugeführt wird, bei der ein Kohlendioxid sowie Schwefelkomponenten enthaltendes Abgas (10) entsteht, das hydriert (H) und nachfolgend einer Gaswäsche (Z) unterzogen wird, **dadurch gekennzeichnet, dass** das hydrierte Abgas (12) unabhängig von dem zu behandelnden Syntheserohgas (2) gewaschen wird, wobei aus dem Waschmittelkreislauf der Sauergaswäsche (S) entnommenes Waschmittel (13) dazu eingesetzt wird, um Schwefelkomponenten auszuwaschen.

2. Verfahren nach Anspruch 1, **dadurch gekennzeichnet, dass** bei der Wäsche des Abgases (12) mit Schwefelkomponenten beladenes Waschmittel (15) in den Regenerierteil (R) der Sauergaswäsche (S) geführt wird.

3. Verfahren nach einem der Ansprüche 1 oder 2, **dadurch gekennzeichnet, dass** zur Wäsche des hydrierten Abgases ein bei der Syntheserohgaswäsche mit Kohlendioxid vorbeladenes Waschmittel eingesetzt wird.

4. Verfahren nach einem der Ansprüche 1 bis 3, **dadurch gekennzeichnet, dass** die Wäsche des hydrierten Abgases (12) bei einem Druck durchgeführt wird, der zwischen 0,2 und 5 bar(a) liegt.

5. Verfahren nach einem der Ansprüche 1 bis 4, **dadurch gekennzeichnet, dass** der Regenerierteil (R) der Sauergaswäsche (S) mit einem erhöhten Druck betrieben wird.

6. Verfahren nach einem der Ansprüche 1 bis 5, **dadurch gekennzeichnet, dass** in der Sauergaswäsche (S) Methanol als Waschmittel (3) eingesetzt wird.

7. Vorrichtung zur Gewinnung von Schwefel (9) mit einer einen Wasch- (W) und einen Regenerierteil (R) umfassenden Sauergaswäsche (S), in der Schwefelkomponenten und Kohlendioxid selektiv mit Hilfe eines im Kreislauf geführten Waschmittels (3) aus einem Syntheserohgas (2) abgetrennt werden können, einer Schwefelgewinnung (G), der eine im Regenerierteil (R) der Sauergaswäsche (S) anfallende schwefelhaltige Gasfraktion (8) zuführbar ist und aus der ein Kohlendioxid sowie Schwefelkomponenten enthaltendes Abgas (10) abziehbar ist, sowie einer Hydriereinrichtung (H), in der das Abgas (10) hydriert werden kann, **dadurch gekennzeichnet, dass** sie eine sowohl mit der Hydriereinrichtung (H) als auch dem Waschmittelkreislauf der Sauergaswäsche (S) verbundene Wascheinrichtung (Z) umfasst, in der das hydrierte Abgas (12) einer Wäsche mit aus dem Waschmittelkreislauf der Sauergaswäsche (S) zugeführtem Waschmittel (13) unterzogen werden kann.

8. Vorrichtung nach Anspruch 7, **dadurch gekennzeichnet, dass** die Wascheinrichtung (Z) derart mit dem Regenerierteil (R) der Sauergaswäsche (S) verbunden ist, dass in der Wascheinrichtung (Z) beladenes Waschmittel (15) in den Regenerierteil (R) einleitbar ist.

9. Vorrichtung nach einem der Ansprüche 7 oder 8, **dadurch gekennzeichnet, dass** die Wascheinrichtung (Z) als Kolonne mit Packung und/oder Böden oder als Sprühdüsenwäsche oder Wirbelstromnassabscheider oder Venturiwäscher oder Fallfilmabsorber ausgeführt ist.

10. Vorrichtung nach einem der Ansprüche 7 bis 9, **dadurch gekennzeichnet, dass** die Wascheinrichtung (Z) für einen Betriebsdruck zwischen 0,2 und 5 bar(a) ausgelegt ist.
